# EUROPÄISCHE PATENTSCHRIFT

(11) **EP 3 758 914 B1**
(45) Veröffentlichungstag und Bekanntmachung des Hinweises auf die Patenterteilung: **22.02.2023**
(21) Anmeldenummer: 19708072.4
(22) Anmeldetag: 26.02.2019
(51) Int. Cl.: B29C 48/92, B29C 48/49, G01N 21/954, G01B 11/06, B29C 48/90, B29C 48/09, G01B 11/10, G01B 11/24, G01B 15/02, G01B 15/04, G01N 21/89, G01N 21/892, G01N 22/00

(54) **VERFAHREN UND VORRICHTUNG ZUM VERMESSEN EINES ROHRFÖRMIGEN STRANGS**
METHOD AND DEVICE FOR MEASURING A TUBULAR STRAND
PROCÉDÉ ET DISPOSITIF POUR MESURER UNE BARRE TUBULAIRE

(30) Priorität: 01.03.2018 DE 102018104705
(43) Veröffentlichungstag der Anmeldung: 06.01.2021
(73) Patentinhaber: SIKORA AG, 28307 Bremen (DE)
(72) Erfinder: HOLLE, Armin, 28832 Achim (DE)
(74) Vertreter: Hauck Patentanwaltspartnerschaft mbB
(86) Internationale Anmeldenummer: PCT/EP2019/054703
(87) Internationale Veröffentlichungsnummer: WO 2019/166420

(56) Entgegenhaltungen:
- WO-A1-87/07364
- WO-A1-2015/074642
- DE-A1- 3 729 743
- DE-B3-102015 110 600
- US-A- 4 304 995
- US-A- 5 760 413
- J. HAUCK ET AL: "Terahertz inline wall thickness monitoring system for plastic pipe extrusion", AIP CONFERENCE PROCEEDINGS, 1. Januar 2014 (2014-01-01), Seiten 86-89, XP055155617, ISSN: 0094-243X, DOI: 10.1063/1.4873740

## Beschreibung

Die Erfindung betrifft ein Verfahren und eine Vorrichtung zum Vermessen eines aus einer Extrusionsvorrichtung austretenden rohrförmigen Strangs.

In Extrusionsvorrichtungen wird beispielsweise granulatförmig zugeführter Kunststoff aufgeschmolzen und der fließfähige Kunststoff durch einen Ringspalt als rohrförmiger Strang ausgebracht. Anschließend tritt der rohrförmige Strang in eine Kalibriervorrichtung mit einer Kalibrierhülse ein, gegen deren Innenfläche der rohrförmige Strang beispielsweise durch Anlegen eines Unterdrucks (Vakuumtank) gepresst wird. Im weiteren Verlauf durchläuft der rohrförmige Strang eine Kühlstrecke, in der die Außenseite des Strangs mit einer Kühlflüssigkeit, wie beispielsweise Kühlwasser, besprüht wird.

Es besteht der Wunsch, bestimmte Geometrieparameter des rohrförmigen Strangs, wie Durchmesser, Wandstärke oder Abweichungen von der vorgegebenen Form, frühzeitig zu ermitteln um auf dieser Grundlage korrigierend in den Extrusionsprozess eingreifen zu können.

Aus WO 2016/139155 A1 sind ein Verfahren und eine Vorrichtung zum Messen des Durchmessers und/oder der Wanddicke eines Strangs mittels Terahertzstrahlung bekannt. Durch einen Strahlungssender wird Terahertzstrahlung auf den zu vermessenden Strang gerichtet und von dem Strang reflektierte Terahertzstrahlung wird von einem Strahlungsempfänger empfangen. Eine Auswerteeinrichtung kann beispielsweise auf Grundlage von Laufzeitmessungen Geometrieparameter wie Durchmesser oder Wanddicke des Strangs ermitteln.

Aus DE 10 2016 109 087 A1 ist ein Verfahren zur Regelung und Steuerung von Rohrextrusionsanlagen bekannt, bei dem zwischen dem Extrusionswerkzeug und der nachfolgenden Kalibriervorrichtung an mehreren Stellen der Durchmesser, die Wandstärke, etwaige Formabweichungen und das Durchhängen des Schmelzeschlauches ermittelt werden und diese Messwerte bzw. daraus berechnete Daten zur Regelung und Steuerung der Extrusionsanlage herangezogen werden. Für die Messung sind in einem Zwischenbereich zwischen Extrusionsanlage und Kalibriervorrichtung mehrere Mess-Sensoren über den Außenumfang des Schmelzeschlauches verteilt angeordnet.

Neben den genannten Messverfahren ist es auch bekannt, Geometrieparameter eines rohrförmigen Strangs mit Ultraschallsensoren zu messen.

Mit dem in DE 10 2016 109 087 A1 beschriebenen Verfahren soll ein schneller Eingriff in die Steuerung der Extrusionsanlage bei Detektieren unerwünschter Geometrieabweichungen möglich sein indem die Messsensoren den rohrförmigen Strang nach Austritt aus der Extrusionsanlage und vor Eintritt in die Kalibriervorrichtung von der Außenseite vermessen. Nachteilig bei dem bekannten Verfahren ist allerdings, dass der rohrförmige Strang vor Eintritt in die Kalibriervorrichtung noch erheblich von seiner in der Kalibriervorrichtung definierten endgültigen Geometrie abweichen kann. Die mit dem bekannten Verfahren ermittelten Messwerte können daher mit entsprechenden Ungenauigkeiten behaftet sein. Ein Messen mit dem bekannten Messverfahren nach Austritt des rohrförmigen Strangs aus der Kalibriervorrichtung, wenn der rohrförmige Strang also für eine Messung von außen wieder zugänglich ist, stellt zwar sicher, dass die gemessenen Geometriewerte nunmehr näher an der endgültigen Geometrie des Strangs liegen. Allerdings führen auf Grundlage solcher späten Messwerte vorgenommene Regeleingriffe in der Extrusionsanlage zu erheblichem in der Zwischenzeit entstandenen Ausschuss. Darüber hinaus ist ein Messen mit dem bekannten Verfahren im Bereich der Kühlstrecke aufgrund der dort wie erläutert auf die Strangaußenseite aufgebrachten Kühlflüssigkeit problematisch. So wird insbesondere die Messung mit Terahertzstrahlung durch im Messweg befindliche Kühlflüssigkeit beeinträchtigt.

Ein weiteres Problem des bekannten Messverfahrens liegt in der defokussierenden Wirkung der Strangaußenfläche. Dies kann dazu führen, dass die auf die Strangaußenseite geleitete Strahlung nach Reflexion an dem Strang nur noch mit erheblich verminderter Signalintensität zu dem Strahlungssensor zurück gelangt. Dies stellt insbesondere bei Strängen großer Wandstärke oder mit stark absorbierendem Material ein erhebliches Problem dar, da mit großen Wandstärken bzw. stark absorbierendem Material eine entsprechend große Strahlungsabsorption einhergeht. Darüber hinaus besteht oftmals der Wunsch, die genannten Geometrieparameter an mehreren Messpunkten über den Umfang des Strangs verteilt zu ermitteln. Hierzu muss bei dem bekannten Verfahren eine Vielzahl von Sensoren über den Umfang verteilt angeordnet werden, wobei es für präzise Messergebnisse erforderlich ist, dass diese auf einer präzisen Kreisbahn angeordnet sind. Dies stellt bei den vorliegend rauen Betriebsbedingungen in der Praxis ein erhebliches Problem dar. Schließlich erfordert das bekannte Verfahren insbesondere bei rohrförmigen Strängen großen Durchmessers aufgrund der vorzusehenden Strahlungssensoren einen erheblichen zusätzlichen Bauraum. Darüber hinaus werden Extrusionsanlagen aus technischen Gründen bevorzugt so konstruiert, dass die Strecke zwischen einem Ringspalt am Extruderkopf und der Kalibrierhülse so gering wie möglich ist. Dies führt zu stark beschränkten Platzverhältnissen. Außerdem ist zwischen Ringspalt und Kalibrierhülse das Extrudat typisch nicht sauber orthogonal zu einem Sensor ausgerichtet, besonders in der Anfahrphase, wo es vermehrt zu Durchhang kommt. Dies kann zu Signalverlust führen.

Aus DE 37 29 743 A1 ist ein Verfahren zur kontinuierlichen Ermittlung der Wandstärke von Hohlprofil-Extrudaten bekannt. Dabei wird an definierten Orten gleichzeitig von der Außenseite und der Innenseite mittels einander gegenüberstehender, ortsfester optoelektronischer Reflexsensoren jeweils der Abstand zur Hohlprofilwandung gemessen und daraus eine Geometrie des Hohlprofils ermittelt.

Aus US 4 304 995 A und US 5 760 413 A sind Verfahren und Vorrichtungen zum Messen der Wanddicke von zum Beispiel extrudierten Gegenständen mittels des Absorptionsprinzips bekannt. Dabei wird optische Strahlung oder Infrarotstrahlung von einem Sender auf die für die Strahlung transparente Wand des Gegenstands ausgesandt und von einem auf der gegenüberliegenden Wandseite angeordneten Empfänger empfangen. Aus der gemessenen Intensität wird auf die erfolgte Strahlungsabsorption und damit die Wanddicke geschlossen. Ein weiteres System zum Messen der Wanddicke insbesondere eines Plastikfilms mittels Infrarotstrahlung unter Messung der Absorption ist in WO 87/07364 A1 beschrieben.

Eine Wanddickenmessung von Plastikrohren mittels gepulster Terahertzstrahlung bei bekanntem Brechungsindex des Rohrmaterials unter Verwendung von Zeitbereichsspektroskopie (Time Domain Spectroscopy) ist bekannt aus J. Hauck et. al: "Terahertz inline wall thickness monitoring system for plastic pipe extrusion", AIP Conference Proceedings, 1. Januar 2014, Seiten 86 bis 89, XP 055155617.

Aus DE 10 2015 110 600 B3 sind ein Verfahren und eine Vorrichtung zur Ermittlung einer Schichteigenschaft einer Schicht in einem Extrusionsprozess bekannt unter Verwendung von Terahertzstrahlung, wobei Terahertzstrahlung von außen auf die Oberfläche der zu ermittelnden Schicht geleitet und reflektierte Strahlung empfangen wird. Eine ähnliche Messvorrichtung ist bekannt aus WO 2015/074642 A1.

Ausgehend von dem erläuterten Stand der Technik liegt der Erfindung die Aufgabe zugrunde, ein Verfahren und eine Vorrichtung der eingangs genannten Art bereitzustellen, mit denen in präziser und wenig Bauraum beanspruchender Weise Geometrieparameter von extrudierten rohrförmigen Strängen möglichst früh nach der Extrusion ermittelt werden können.

Die Erfindung löst die Aufgabe durch die unabhängigen Ansprüche 1 und 10. Vorteilhafte Ausgestaltungen finden sich in den abhängigen Ansprüchen, der Beschreibung und den Figuren.

Für ein Verfahren der eingangs genannten Art löst die Erfindung die Aufgabe dadurch, dass von mindestens einer Strahlungsquelle elektromagnetische Strahlung im Frequenzbereich von 1 GHz bis 6000 GHz von innen auf die Innenseite des rohrförmigen Strangs geleitet wird, dass durch den rohrförmigen Strang reflektierte elektromagnetische Strahlung von mindestens einem Strahlungsempfänger empfangen wird, und dass aus der empfangenen elektromagnetischen Strahlung der Durchmesser und/oder die Wandstärke und/oder Formabweichungen des rohrförmigen Strangs ermittelt wird.

Für eine Vorrichtung er eingangs genannten Art löst die Erfindung die Aufgabe dadurch, dass mindestens eine Strahlungsquelle für elektromagnetische Strahlung im Frequenzbereich von 1 GHz bis 6000 GHz vorgesehen ist, die derart angeordnet ist, dass von ihr ausgesandte elektromagnetische Strahlung von innen auf die Innenseite des rohrförmigen Strangs geleitet wird, dass weiterhin mindestens ein Strahlungsempfänger vorgesehen ist zum Empfangen von durch den rohrförmigen Strang reflektierter elektromagnetischer Strahlung, und dass eine Auswerteeinrichtung vorgesehen ist, die dazu ausgebildet ist, aus der empfangenen elektromagnetischen Strahlung den Durchmesser und/oder die Wandstärke und/oder Formabweichungen des rohrförmigen Strangs zu ermitteln.

Der erfindungsgemäß vermessene rohrförmige Strang ist ein aus einer Extrusionsvorrichtung austretender insbesondere hohlzylindrischer Kunststoffstrang. Der rohrförmige Strang kann einen Außendurchmesser von mehr als 1m besitzen. Damit einhergehen entsprechend große Wandstärken. Die Erfindung basiert grundsätzlich auf dem bereits im Stand der Technik beschriebenen Messprinzip, bei dem elektromagnetische Strahlung von einer Strahlungsquelle auf den rohrförmigen Strang gerichtet wird und von diesem reflektierte Strahlung von einem Strahlungsempfänger empfangen wird. Erfindungsgemäß wird elektromagnetische Strahlung im Frequenzbereich von 1 GHz bis 6000 GHz verwendet. Ein Vorteil von Strahlung in diesem Frequenzbereich ist, dass diese, anders als beispielsweise Laserstrahlung im sichtbaren Frequenzbereich, weitgehend unempfindlich gegenüber äußeren Einflüssen ist, wie sie bei Extrusionsprozessen auftreten. Beispielsweise aufgrund von Laufzeitmessungen können damit in an sich bekannter Weise Geometrieparameter wie Außendurchmesser, Wandstärke und/oder Abweichungen von der vorgegebenen beispielsweise kreiszylindrischen Form ermittelt werden. In besonders praxisgemäße Weise können Strahlungsquelle und Strahlungsempfänger dabei als sogenannter Transceiver in ein Bauteil integriert sein. Zur Ermittlung der Wandstärke wird elektromagnetische Strahlung in einem Wellenlängenbereich verwendet, für den der extrudierte Strang wenigstens teiltransparent ist.

Anders als beim Stand der Technik wird erfindungsgemäß die elektromagnetische Strahlung der mindestens einen Strahlungsquelle nicht von außen, sondern von innen auf die Innenseite des rohrförmigen Strangs geleitet. Ein Teil der elektromagnetischen Strahlung wird entsprechend zunächst an der Innenfläche des Strangs reflektiert und gelangt zurück zu dem Strahlungsempfänger, der wie erläutert ein gemeinsames Bauteil mit der Strahlungsquelle bilden kann. Ein anderer Teil der elektromagnetischen Strahlung dringt in die Wand des rohrförmigen Strangs ein und wird an der Außenfläche des rohrförmigen Strangs reflektiert. Auch dieser an der Außenfläche reflektierte Strahlungsanteil gelangt zurück zu dem Strahlungsempfänger. Beispielsweise aus einer Laufzeitdifferenz der beschriebenen Strahlungsanteile kann die Wandstärke des Strangs ermittelt werden. Weiterhin kann zum Beispiel bei Aussenden der elektromagnetischen Strahlung auf die Innenseite des rohrförmigen Strangs ausgehend von der Längsachse des Strangs aus einer Laufzeitmessung des an der Außenfläche des Strangs reflektierten Strahlungsanteils der Radius und entsprechend der Durchmesser des Strangs bestimmt werden. Sofern beispielsweise an verschiedenen Messpunkten über den Innenumfang des Strangs verteilt eine erfindungsgemäße Messung erfolgt, kann aus der jeweiligen Laufzeitmessung auch eine Durchmesserabweichung an unterschiedlichen Messpunkten und damit eine Abweichung des Außendurchmesser oder des Innendurchmessers des Strangs von einer vorgegebenen Form, insbesondere einer Kreisform, also beispielsweise eine Ovalität, ermittelt werden.

Durch das erfindungsgemäße Messen von der Innenseite des rohrförmigen Strangs werden gegenüber dem Stand der Technik erhebliche Vorteile realisiert. So wirkt die Krümmung der Stranginnenwand fokussierend auf die ausgesendete Strahlung, so dass der Strahlungsempfänger auch bei großen Wandstärken jederzeit eine hohe Signalintensität empfängt. In optischer Hinsicht ist diese Anordnung gegenüber der zum Stand der Technik beschriebenen Messung von außen optimal. Indem die Messsensorik in dem von dem rohrförmigen Strang umschlossenen Innenbereich angeordnet wird, bleibt der Bereich um den Außenumfang des Strangs frei. Dadurch kann zunächst der erforderliche Bauraum erheblich verringert werden, was insbesondere bei Strängen großen Durchmessers wichtig ist. Hinzu kommt, dass erfindungsgemäß auch in einem Bereich gemessen werden kann, in dem die Außenfläche des rohrförmigen Strangs verdeckt ist, beispielsweise durch eine metallische Kalibrierhülse einer Kalibriervorrichtung. Es ist im Gegensatz zum Stand der Technik also nicht erforderlich, in einem freien Bereich zwischen Extrusionsanlage und Kalibriervorrichtung zu messen, in dem der rohrförmige Strang noch weit von seiner endgültigen Geometrie abweichen kann. Vielmehr kann erfindungsgemäß auch der bereits in die Kalibriervorrichtung, insbesondere eine Kalibrierhülse, eingetretene rohrförmige Strang vermessen werden, so dass bereits Geometrieparameter bestimmt werden, die durch die Kalibrierhülse eindeutig vorgegeben sind und wenigstens nahe an den endgültigen Geometrieparametern sind. Messungen beispielsweise der Wandstärke Strangs liefern also bereits sehr eindeutige Informationen, wie sich die Wandstärke über den Umfang verteilt und ob diese der für den Fertigungsprozess erforderlichen Verteilung entspricht. Diese Kalibrierhülse kann sich darüber hinaus unmittelbar an die Extrusionsvorrichtung anschließen, so dass unmittelbar nach Austritt des rohrförmigen Strangs aus der Extrusionsvorrichtung Messwerte für eine Steuerung bzw. Regelung der Extrusionsanlage zur Verfügung stehen. Ausschuss kann entsprechend minimiert werden. Gleichzeitig ist eine jederzeit zuverlässige Bestimmung der beschriebenen Geometrieparameter möglich.

Ein weiterer Vorteil der Erfindung liegt darin, dass auf die beim Stand der Technik regelmäßig vorzusehende Gravimetrie unter Umständen ganz verzichtet werden kann, oder dass die Gravimetrie nur noch redundant erforderlich ist. So kann aufgrund der erfindungsgemäß zuverlässig ermittelten Messwerte und bei bekannter Liniengeschwindigkeit der Extrusionsvorrichtung direkt auf die bei der Extrusion eingesetzte Materialmenge geschlossen werden.

Es ist möglich, für die mindestens eine Strahlungsquelle bzw. den mindestens einen Strahlungsempfänger, insbesondere den mindestens einen Transceiver, eine Positioniereinrichtung, insbesondere zur Positionierung in einer Ebene senkrecht zur Längsachse des rohrförmigen Strangs, vorzusehen. Auf diese Weise kann die Position des Transceivers genau eingestellt werden, was eine präzise Geometrievermessung weiter befördert. Weiterhin kann es zur Reduzierung von Wärmeeinstrahlung auf die mindestens eine Strahlungsquelle und/oder den mindestens einen Strahlungsempfänger vorteilhaft sein, eine Schutzabdeckung vorzusehen, die Infrarotstrahlung reflektiert, die zur Messung verwendete elektromagnetische Strahlung jedoch durchlässt. Denkbar wäre eine entsprechend mit einer Breitband-Infrarot-Reflexionsschicht beschichtete temperaturbeständige Glasscheibe. Eine solche Schutzscheibe dient gleichzeitig als Schutz vor Verschmutzung.

Es ist weiterhin möglich, einen Temperatursensor vorzusehen zum Messen der Temperatur des rohrförmigen Strangs an mindestens einem Messbereich am Innenumfang des rohrförmigen Strangs. Die Temperatur des Strangs kann für die Steuerung des Extrusionsprozesses wichtig sein. Infrage kommen beispielsweise PIR-Sensoren. Der mindestens eine Temperatursensor kann seine Messwerte als Funktion des Ortes, beispielsweise als Funktion eines Drehwinkels bei einem rotierenden Temperatursensor, abgeben.

Weiterhin kann mindestens eine ortsauflösende Kamera vorgesehen sein zum Aufnehmen der Innenfläche des rohrförmigen Strangs. Das Abbild der Oberfläche bzw. der Oberflächenstruktur des extrudierten Materials kann ebenfalls als Messwert hilfreich sein, um den Extrusionsprozess in geeigneter Weise zu steuern bzw. zu regeln. Auf diese Weise können Imperfektionen der inneren Oberfläche früh erkannt werden und gegebenenfalls durch Änderungen der Extrusionsparameter abgestellt werden. Als ortsauflösende Kamera kommt zum Beispiel eine Zeilenkamera infrage, die gegebenenfalls gemeinsam mit dem mindestens einen Strahlungssender und/oder der mindestens einen Strahlungsquelle rotieren kann. Es kann der ortsauflösenden Kamera zusätzlich eine Beleuchtungseinrichtung zugeordnet sein, die die Stranginnenfläche beleuchtet. Je nach den zu bestimmenden Eigenschaften kann eine Beleuchtung im sichtbaren weißen Licht, im Infrarotlicht oder auch im UV-Licht erfolgen.

Gemäß einer Ausgestaltung kann die Extrusionsvorrichtung auf Grundlage der ermittelten Werte für Durchmesser und/oder Wandstärke und/oder Formabweichungen gesteuert und/oder geregelt werden. Wie eingangs erläutert, erlaubt die erfindungsgemäße Messanordnung eine besonders schnelle Steuerung bzw. Regelung des Extrusionsprozesses und damit eine Minimierung von Ausschuss.

Gemäß einer weiteren Ausgestaltung kann die mindestens eine Strahlungsquelle und/oder der mindestens eines Strahlungsempfänger im Inneren des rohrförmigen Strangs angeordnet sein. Es kann dann weiter vorgesehen sein, dass eine Versorgung der mindestens einen Strahlungsquelle und/oder des mindestens einen Strahlungsempfängers mit elektrischer Energie, Daten und/oder mit einem Kühlmittel durch mindestens eine aus einem Extruderkopf der Extrusionsvorrichtung zu der mindestens einen Strahlungsquelle und/oder dem mindestens einen Strahlungsempfänger geführten Versorgungsleitung erfolgt. Insbesondere eine Datenübertragung kann dabei selbstverständlich auch bidirektional erfolgen. Diese Ausgestaltung ist besonders bei großen rohrförmigen Strängen einsetzbar, die im Innenraum ausreichend Platz für die mindestens eine Strahlungsquelle und den mindestens einen Strahlungsempfänger, insbesondere mindestens einen Transceiver, bieten. Der Extruderkopf weist in der Regel eine mit einem Schaft drehend angetriebene Schnecke auf, mit der das plastifizierte Kunststoffmaterial durch einen Ringspalt zur Bildung des rohrförmigen Strangs aus dem Extruderkopf ausgebracht wird. Sofern die Strahlungsquelle und/oder der Strahlungsempfänger im Inneren des rohrförmigen Strangs angeordnet sind, kann entsprechend eine elektrische Versorgung und oder eine Versorgung mit einem Kühlmittel, wie einer Kühlflüssigkeit, durch den Extruderkopf direkt in das Innere des rohrförmigen Strang erfolgen. Beispielsweise kann mindestens eine diesbezügliche Versorgungsleitung aus dem Extruderkopf in Längsrichtung des extrudierten Strangs in das Innere des Strangs austreten. Die mindestens eine Versorgungsleitung kann zum Beispiel durch einen zentralen, von einer Extruderschnecke umgebenen Schaft des Extruderkopfs geführt sein. Alternativ zu einer solchen elektrischen Versorgung oder Kühlmittelversorgung wäre es grundsätzlich auch denkbar, dass eine Versorgung durch Batterien und/oder Kühlelemente, wie Peltierelemente, erfolgt.

Gemäß einer weiteren Ausgestaltung kann vorgesehen sein, dass die mindestens eine Strahlungsquelle und/oder der mindestens eine Strahlungsempfänger außerhalb des rohrförmigen Strangs angeordnet ist, und dass von der mindestens einen Strahlungsquelle ausgesandte Strahlung über mindestens einen Strahlungsleiter in das Innere des rohrförmigen Strangs geleitet wird, und dass die von dem rohrförmigen Strang reflektierte Strahlung über mindestens einen Strahlungsleiter aus dem Inneren des rohrförmigen Strangs zu dem mindestens einen Strahlungsempfänger geleitet wird. Diese Ausgestaltung ist insbesondere bei Strängen mit verhältnismäßig kleinem Durchmesser gut einsetzbar, bei denen im Stranginneren wenig Raum zur Verfügung steht. Außerdem werden auf diese Weise die mindestens eine Strahlungsquelle und der mindestens eine Strahlungsempfänger wirksam vor hohen Temperaturen und anderen Beeinträchtigungen geschützt. Als Strahlungsleiter kommen zum Beispiel Hohlleiter infrage.

Nach einer weiteren Ausgestaltung kann der mindestens eine Strahlungsleiter aus einem Extruderkopf der Extrusionsvorrichtung in das Innere des rohrförmigen Strangs geführt sein. Wiederum ist es möglich, dass der Strahlungsleiter auf dem Extruderkopf in Längsrichtung des extrudierten rohrförmigen Strangs in das Innere des Strangs geführt ist. Beispielsweise kann der Strahlungsleiter wiederum durch einen zentralen, von einer Extruderschnecke umgebenen Schaft des Extruderkopfs geführt sein.

Die elektromagnetische Strahlung kann nach einer weiteren Ausgestaltung ausgehend von der Längsachse des rohrförmigen Strangs und/oder senkrecht zur Längsachse des rohrförmigen Strangs auf die Innenseite des rohrförmigen Strangs geleitet werden. Ein solches Leiten der Strahlung ausgehend von dem Zentrum des Strangs erlaubt eine Durchmesserbestimmung auch dann, wenn nur ein Messpunkt vorgesehen ist.

Bei der Erfindung wird die elektromagnetische Strahlung auf mehrere über den Innenumfang des rohrförmigen Strangs verteilte Messbereiche der Innenseite des rohrförmigen Strangs geleitet werden. Die Genauigkeit der Geometriebestimmung kann auf diese Weise erhöht werden. Es könnte beispielsweise eine Messung an mindestens 20 über den Innenumfang des rohrförmigen Strangs verteilten Messbereichen bzw. Messpunkten, vorzugsweise mindestens 50 Messbereichen bzw. Messpunkten, erfolgen.

Die elektromagnetische Strahlung wird weiterhin mit mindestens einem im Inneren des rohrförmigen Strangs angeordneten, um die Längsachse des rohrförmigen Strangs rotierenden Strahlungssender auf die Innenseite des rohrförmigen Strangs geleitet werden. Auf diese Weise kann über den Innenumfang des Strangs verteilt eine Vielzahl von Messpunkten vorgesehen werden. Im Gegensatz zu einer Rotation über den Außenumfang des Strangs erfolgt bei der erfindungsgemäßen Anordnung im Inneren des Strangs, insbesondere im Zentrum des Strangs, prinzipbedingt eine erheblich präzisere und temperaturstabilere Kreisbahn der Rotation, was wiederum präzisere Messwerte liefert. Auch ist bei einer kontinuierlichen Rotation keine Funkstrecke erforderlich. Vielmehr sind zuverlässige Schleifringanordnungen auch für eine Datenübertragung bei einer zentralen Anbringung im Stranginneren verfügbar. Neben dem Messkopf mit Strahlungssender und gegebenenfalls Strahlungsempfänger ist dann keinerlei weitere Elektronik im Innenraum des Strangs zu platzieren. Antriebe für eine beschriebene Drehbewegung sind einfach und robust ausgebildet.

Der mindestens eine Strahlungssender kann die mindestens eine Strahlungsquelle sein. Neben der mindestens einen Strahlungsquelle kann entsprechend auch der mindestens eine Strahlungsempfänger im Inneren des Strangs angeordnet sein, wobei diese gemeinsam rotieren können. Zum Beispiel kann mindestens ein rotierender Transceiver vorgesehen sein.

Es ist alternativ auch möglich, dass der mindestens eine im Inneren des rohrförmigen Strangs angeordnete Strahlungssender mindestens ein durch die mindestens eine Strahlungsquelle bestrahlter, um die Längsachse des rohrförmigen Strangs rotierender Spiegel ist. Die mindestens eine Strahlungsquelle und gegebenenfalls auch der mindestens eine Strahlungsempfänger können bei dieser Ausgestaltung geschützt und bei geringem Bauraum außerhalb des Strangs angeordnet werden. Nur der rotierende Spiegel muss im Stranginneren angeordnet sein. Er lenkt zum Beispiel die über einen Strahlungsleiter in Längsrichtung des Strangs in das Stranginnere geführte elektromagnetische Strahlung um 90° auf die Innenfläche des Strangs ab. Je nach Drehposition des Spiegels kann so der gesamte Innenumfang des Strangs abgefahren und vermessen werden. Die von dem Strang zurück reflektierte Strahlung wird wiederum von dem rotierenden Spiegel in den Strahlungsleiter und zurück zu dem Strahlungsempfänger geführt.

Als elektromagnetische Strahlung kann gemäß einer besonders praxisgemäßen Ausgestaltung elektromagnetische Strahlung im Frequenzbereich von 10 GHz bis 3000 GHz, bevorzugt im Frequenzbereich von 20 GHz bis 1000 GHz, verwendet werden. Derartige Terahertzstrahlung ist für die erfindungsgemäße Vermessung besonders gut geeignet. Sie ist weitgehend unempfindlich gegenüber äußeren Einflüssen. Es kann beispielsweise gepulste oder frequenzmodulierte Continuous Wave-Strahlung (FMCW-Strahlung) zum Einsatz kommen.

Gemäß einer weiteren Ausgestaltung kann sich der vermessene Teil des rohrförmigen Strangs während der Messung in einer der Extrusionsvorrichtung nachfolgenden Kalibriervorrichtung befinden. Wie eingangs erläutert, weisen solche Kalibriervorrichtungen häufig hohlzylindrische Kalibrierhülsen auf, gegen die der extrudierte Strang im noch weichen Zustand beispielsweise durch Anlegen eines Unterdrucks (Vakuumtank) angedrückt wird. Hierdurch wird einerseits ein Kollabieren des noch fließfähigen Strangs verhindert. Andererseits wird durch die Kalibrierhülse der gewünschte Durchmesser des Strangs und seine Außenform definiert vorgegeben. Die Kalibriervorrichtung, insbesondere die Kalibrierhülse, kann sich dabei unmittelbar an einen Extruderkopf der Extrusionsvorrichtung anschließen. Es ist also insbesondere möglich, dass zwischen dem Extruderkopf und der Kalibriervorrichtung im Wesentlichen kein Abstand besteht. Indem die Messung in der Kalibriervorrichtung, insbesondere ausgehend von deren Zentrum, erfolgt, wenn der extrudierte Strang die Kalibriervorrichtung durchläuft, erfolgt einerseits eine Geometriebestimmung im Wesentlichen unmittelbar nach der Extrusion und somit zu einem für die Steuerung bzw. Regelung günstigen frühen Zeitpunkt. Andererseits weist der rohrförmige Strang in der Kalibriervorrichtung bereits eine nahe an seiner endgültigen Geometrie liegende Geometrie auf, so dass die diesbezüglichen Messwerte zuverlässig einer Steuerung bzw. Regelung zugrunde gelegt werden können. Es ist eine im Vergleich zu dem eingangs erläuterten Stand der Technik erheblich definiertere Aussage zum Außendurchmesser, zur Wandstärke und zu etwaigen Formabweichungen möglich.

Grundsätzlich wäre es auch denkbar, die erfindungsgemäße Messung in einer der Kalibriervorrichtung nachfolgenden Kühlstrecke durchzuführen, in der beispielsweise von außen Kühlflüssigkeit, wie Wasser, auf den Strang aufgebracht wird. Aufgrund der erfindungsgemäßen Messung von innen ist das von außen aufgebrachte Kühlmittel im Gegensatz zu dem eingangs erläuterten Stand der Technik kein Problem. Insbesondere muss nicht durch einen Wasserfilm hindurch gemessen werden, was gerade bei der verwendeten Millimeterwellenstrahlung aufgrund mangelnder Durchlässigkeit problematisch ist. Andererseits ist im Bereich der Kühlstrecke der Strang bereits weitestgehend formstabil, so dass die gemessenen Geometrieparameter noch näher an ihren endgültigen Werten liegen. Die Zuverlässigkeit der Messwerte kann so weiter gesteigert werden.

Nach einer weiteren Ausgestaltung kann außerhalb des rohrförmigen Strangs mindestens ein Strahlungsreflektor vorgesehen sein, der von der mindestens einen Strahlungsquelle auf die Innenseite des rohrförmigen Strangs geleitete elektromagnetische Strahlung reflektiert, wobei aus dieser reflektierten Strahlung der Brechungsindex des Strangmaterials bestimmt wird. Die Bestimmung des Brechungsindexes kann grundsätzlich erfolgen wie in WO 2016/139155 A1 beschrieben. So kann aus einem Vergleich der Laufzeit der elektromagnetischen Strahlung zwischen dem Strahlungssender und dem Reflektor ohne rohrförmigen Strang und der Laufzeit zwischen Strahlungssender und Reflektor mit rohrförmigem Strang bei bekannter Wandstärke auf den Brechungsindex des Strangmaterials geschlossen werden. Dafür ist nur die Bestrahlung einer Wand des Strangs erforderlich. Es muss lediglich die Position des feststehenden Reflektors und des Strahlungssenders bekannt sein. Es könnten auch zwei feststehende gegenüberliegende Reflektoren vorgesehen sein, deren Abstand zueinander bekannt ist. Auch ist es möglich, den Brechungsindexmaterials an verschiedenen Stellen über den Umfang zu bestimmen. Mit einer entsprechenden Kalibrierung kann hieraus auf die mittlere Temperatur des Strangmaterials an dem Messort geschlossen werden. Während beispielsweise ein PIR-Sensor die Oberflächentemperatur des Strangs misst, könnte auf diese Weise die Temperatur in der Strangwand ermittelt werden.

Nach einer weiteren Ausgestaltung kann der mindestens eine Strahlungsreflektor durch eine metallische Kalibrierhülse der Kalibriervorrichtung gebildet sein. Wie bereits erläutert, weist die Kalibriervorrichtung in der Regel eine metallische Kalibrierhülse auf, gegen die der rohrförmige Strang beispielsweise mittels Unterdruck gedrückt wird. In besonders einfacher Weise kann diese Kalibrierhülse gleichzeitig als Reflektor für die Brechungsindexbestimmung genutzt werden. Ein Positionieren und Halten eines zusätzlichen Reflektors kann entfallen.

Gemäß einer weiteren Ausgestaltung können mehrere seitlich versetzt angeordnete Strahlungssender und/oder mehrere seitlich versetzt angeordnete Strahlungsempfänger vorgesehen sein. Gerade wenn das Strangmaterial noch fließfähig ist, kann es zu sogenanntem Sagging kommen, bei dem die Innenfläche des Strangs von der vorgegebenen kreiszylindrischen Form abweicht. Je nach Formabweichung können dabei geneigte Oberflächen entstehen, die dazu führen können, dass die von der Oberfläche reflektierte Strahlung nicht zu dem Strahlungsempfänger zurückgelangt. Um in einem solchen Fall den Signalverlust zu verringern bzw. zu verhindern, können gemäß der oben genannten Ausgestaltung mehrere Strahlungssender und/oder Strahlungsempfänger nebeneinander angeordnet werden. Beispielsweise wenn mindestens drei Transceiver nebeneinander angeordnet werden, kann die von einer geneigten Oberfläche zurück reflektierte Strahlung eines der Transceiver von einem der anderen Transceiver empfangen und so beim Messergebnis berücksichtigt werden. Es wäre dabei sowohl möglich, dass die nebeneinander angeordneten Transceiver jeweils für sich autark arbeiten, oder dass diese synchronisiert sind, so dass ein Transceiver das eingehende Signal eines anderen Transceivers empfangen und auswerten kann. Es kann auch vorgesehen sein, dass die Synchronisation der Transceiverpaare in geeigneter Weise angepasst werden kann, zum Beispiel dynamisch oder gemeinsam geschaltet werden kann, je nach Signalbeschaffenheit.

Das erfindungsgemäße Verfahren kann mit der erfindungsgemäßen Vorrichtung durchgeführt werden. Die erfindungsgemäße Vorrichtung kann zur Durchführung des erfindungsgemäßen Verfahrens ausgebildet sein.

Ausführungsbeispiele der Erfindung werden nachfolgend anhand von Figuren näher erläutert. Es zeigen schematisch:
- Figur 1: eine Anordnung mit einer erfindungsgemäßen Vorrichtung in einer Schnittansicht nach einem ersten Ausführungsbeispiel,
- Figur 2: eine Anordnung mit einer erfindungsgemäßen Vorrichtung in einer Schnittansicht nach einem zweiten Ausführungsbeispiel,
- Figur 3: eine Anordnung mit einer erfindungsgemäßen Vorrichtung in einer Schnittansicht nach einem dritten Ausführungsbeispiel,
- Figur 4: eine Querschnittsansicht entlang der Linie A-A in Figur 2.

Soweit nichts anderes angegeben ist, bezeichnen in den Figuren gleiche Bezugszeichen gleiche Gegenstände.

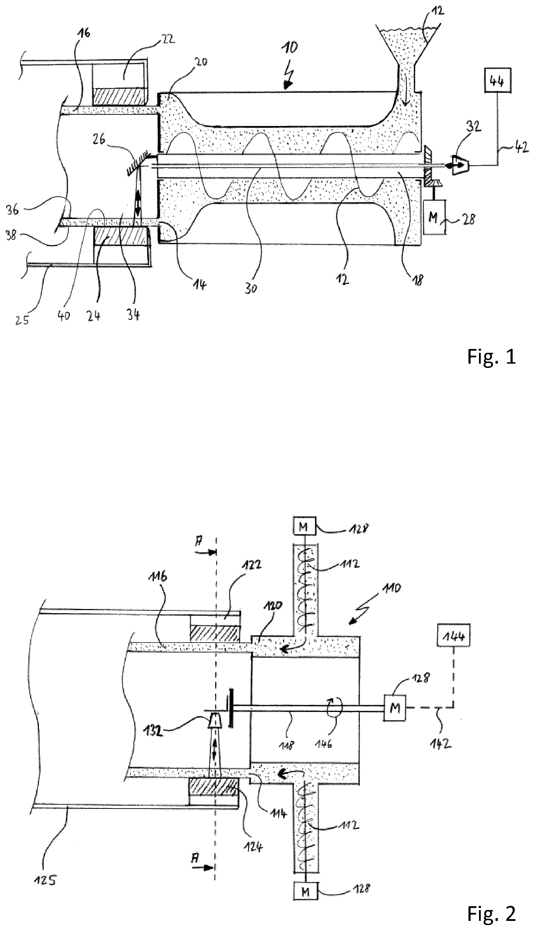

In Figur 1 ist eine Extrusionsvorrichtung 10 zum Extrudieren eines rohrförmigen Strangs gezeigt. Die Extrusionsvorrichtung 10 besitzt in an sich bekannter Weise eine Zuführung 12 zum Zuführen des zu verarbeitenden Kunststoffmaterials. Über eine Extruderschnecke 12 wird das plastifizierte Kunststoffmaterial aus einem Ringspalt 14 zu einem rohrförmigen Strang 16 extrudiert. Innerhalb der Extruderschnecke 12 verläuft ein drehend angetriebener zentraler Schaft 18. Unmittelbar an den Extruderkopf 20 schließt sich in dem gezeigten Beispiel eine Kalibriervorrichtung 22 an, mit einer metallischen Kalibrierhülse 24, gegen die der extrudierte Strang 16 mittels Unterdruck gepresst wird. An die Kalibrierhülse schließt sich ein Kühlrohr 25 einer Kühlstrecke an.

Bei dem in Figur 1 gezeigten Beispiel ist im Inneren des extrudierten Strangs 16 und im Wesentlichen unmittelbar im Anschluss an den Extruderkopf 20 und somit in der Kalibriervorrichtung 22 ein Spiegel 26 angeordnet. Der Spiegel 26 ist mit dem Schaft 18 verbunden, der wiederum über einen Motor 28 drehend angetrieben wird. Dadurch wird auch der Spiegel 26 um die Längsachse des rohrförmigen Strangs 16 rotiert. In dem Schaft 18 verläuft außerdem ein Hohlleiter 30, der von einem Transceiver 32, der in dem gezeigten Beispiel eine Strahlungsquelle und einen Strahlungsempfänger umfasst, ausgesandte elektromagnetische Strahlung, vorzugsweise Terahertzstrahlung im Frequenzbereich von 10 GHz bis 3000 GHz, weiter vorzugsweise im Frequenzbereich von 20 GHz bis 1000GHz, zu dem Spiegel 26 leitet, der diese Strahlung um 90° auf die Innenfläche des Strangs 16 ablenkt, wie in Figur 1 durch das Bezugszeichen 34 veranschaulicht. Die elektromagnetische Strahlung wird einerseits von der Innenfläche 36 des extrudierten Strangs zurück zu dem Spiegel 26 reflektiert und von diesem über den Hohlleiter 30 zurück zu dem Transceiver 32 geleitet. Ein weiterer Strahlungsanteil tritt in den extrudierten Strang 16 ein und wird an der Grenzfläche zwischen Außenseite 38 des Strangs 16 und Innenfläche 40 der Kalibrierhülse 24 reflektiert und wieder von dem Spiegel 26 und dem Hohlleiter 30 zu dem Transceiver 32 geleitet.

Die von dem Transceiver 32 empfangenen Messwerte werden über eine Leitung 42 zu einer Auswerteeinrichtung 44 übertragen. Die Auswerteeinrichtung 44 ermittelt beispielsweise aufgrund von Laufzeitmessungen aus den Messwerten den Außendurchmesser und/oder die Wandstärke und/oder etwaige Formabweichungen des extrudierten Strangs 16. Außerdem kann in der oben erläuterten Weise anhand der an der Grenzfläche zur metallischen Kalibrierhülse 24 zurückreflektierten Strahlung auch der Brechungsindex des Strangmaterials bestimmt werden. Aufgrund der Rotation des Spiegels 26 kann die erläuterte Messung für eine Vielzahl von Messbereichen über den Umfang des rohrförmigen Strangs 16 verteilt erfolgen. Auf Grundlage der ermittelten Messwerte kann die Auswerteeinrichtung 44, die insofern gleichzeitig eine Steuer- und/oder Regeleinrichtung darstellen kann, die Extrusionsvorrichtung steuern und/oder regeln.

In Figur 2 ist ein weiteres Ausführungsbeispiel gezeigt, dass weitgehend dem Ausführungsbeispiel nach Figur 1 entspricht. Im Unterschied zu dem Ausführungsbeispiel der Figur 1 ist in Figur 2 eine Extrusionsvorrichtung 110 gezeigt, die zwei senkrecht zur Längsachse des Ringspalts 114 verlaufende Extruderschnecken 112 besitzt. Die Extruderschnecken 112 werden jeweils über einen Motor 128 drehend angetrieben. Das zugeführte Material wird wieder über den Ringspalt 114 zur Bildung des rohrförmigen Strangs 116 ausgebracht. Unmittelbar im Anschluss an die Extrusionsvorrichtung 110 ist wiederum eine Kalibriervorrichtung 122 mit einer metallischen Kalibrierhülse 124 vorgesehen. Weiterhin ist ein Kühlrohr 125 einer Kühlstrecke gezeigt. Der in Figur 2 extrudierte rohrförmige Strang 116 kann einen größeren Durchmesser besitzen als der in Figur 1 gezeigte rohrförmige Strang 16. Entsprechend besteht bei dem Ausführungsbeispiel der Figur 2 mehr Platz im Innenraum des Strangs 116. Daher ist bei diesem Ausführungsbeispiel ein Transceiver 132 im Stranginneren angeordnet. Der Transceiver 132 wird über einen durch den Extruderkopf 120 geführten Schaft 118 mittels eines weiteren Motors 128 drehend angetrieben, wie in Figur 2 durch den Pfeil 146 angedeutet. Der Transceiver 132 kann zum Beispiel über Schleifringkontakte mit einer nicht näher dargestellten externen elektrischen Versorgung verbunden sein. Über diese Schleifringkontakte kann gegebenenfalls auch eine Übertragung der Messwerte des Transceivers 132 an die Auswerteeinrichtung 144 erfolgen, wie durch die gestrichelt dargestellte Leitung 142 veranschaulicht.

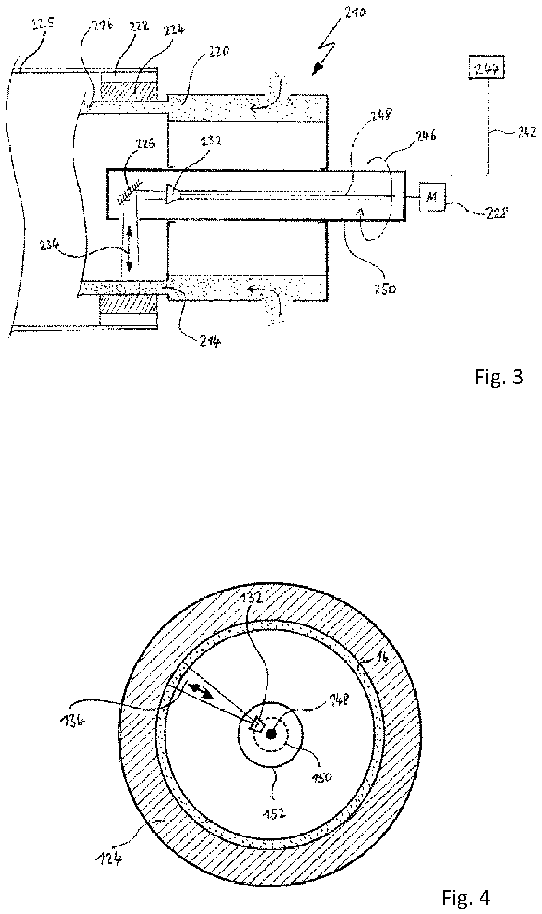

Der rotierende Transceiver 132 nimmt in grundsätzlich gleicher Weise wie zu Figur 1 beschrieben Messwerte auf, so dass die Auswerteeinrichtung 144 auf dieser Grundlage insbesondere den Außendurchmesser, die Wandstärke und etwaige Formabweichungen des rohrförmigen Strangs 116 bestimmen kann. Wiederum kann auf dieser Grundlage eine Regelung und/oder Steuerung der Extrusionsvorrichtung 110 erfolgen. Denkbar wäre grundsätzlich auch, den Rotationsantrieb ebenfalls in dem Inneren des rohrförmigen Strangs 116 anzuordnen. In Figur 4 ist die von dem Transceiver 132 ausgesandte und zurück reflektierte Strahlung bei dem Bezugszeichen 134 veranschaulicht. Außerdem sind in Figur 4 der Rotationsmittelpunkt 148 und die Kreisbahn 150 des Transceivers gezeigt. Bei dem Bezugszeichen 152 ist ein Gehäuse des Messkopfes mit dem Transceiver 132 veranschaulicht.

In Figur 3 ist ein weiteres Ausführungsbeispiel dargestellt, das wiederum weitgehend den oben erläuterten Ausführungsbeispielen entspricht. Die in Figur 3 gezeigte Extrusionsvorrichtung 210 bringt wiederum über einen Ringspalt 214 über nicht näher dargestellte Extruderschnecken zugeführtes plastifiziertes Kunststoffmaterial zu einem rohrförmigen Strang 216 aus. Wiederum schließt sich im Wesentlichen unmittelbar an den Extruderkopf 220 eine Kalibriervorrichtung 222 mit einer metallischen Kalibrierhülse 224 an, gegen die der Strang 216 beispielsweise mittels Unterdruck gedrückt wird. Bei dem Bezugszeichen 225 ist ein Kühlrohr einer Kühlstrecke gezeigt. In dem gezeigten Beispiel befindet sich im Stranginneren wiederum ein Spiegel 226 innerhalb der Kalibriervorrichtung 222, der von einem im Extruderkopf 220 angeordneten Transceiver 232 ausgesandte elektromagnetische Strahlung um 90° auf die Innenfläche des Strangs 216 ablenkt, wie bei 234 veranschaulicht. Über einen in Figur 3 bei dem Bezugszeichen 228 dargestellten Motor wird der Transceiver 232 gemeinsam mit dem Spiegel 226 um die Längsachse des rohrförmigen Strangs 216 rotiert, wie durch den Pfeil 246 veranschaulicht. Eine Versorgungsleitung 248 dient zur elektrischen Versorgung des Transceivers und zur Versorgung mit einem Kühlmittel, wie einer Kühlflüssigkeit.

Außerdem können von dem Transceiver 232 aufgenommene Messwerte über die Versorgungsleitung 248 über eine Leitung 242 einer Auswerteeinrichtung 244 zugeleitet werden. Die Aufnahme der Messwerte, die Auswertung durch die Auswerteeinrichtung 244 und die darauf basierende Steuerung und/oder Regelung der Extrusionsvorrichtung 210 entspricht bei dem in Figur 3 gezeigten Ausführungsbeispiel den oben erläuterten Ausführungsbeispielen. Bei dem Ausführungsbeispiel nach Figur 3 befinden sich der Spiegel 226 und der Transceiver 232 innerhalb eines Gehäuses 250, das zur Messung als Einschub in den Extruderkopf 220 eingesetzt werden kann. Durch Entnahme des Gehäuses 250 kann die Messvorrichtung sofern gewünscht in einfacher Weise entfernt werden.

### Bezugszeichen

- 10, 110, 210: Extrusionsvorrichtung
- 12: Zuführung
- 12, 112: Extruderschnecke
- 14, 114, 214: Ringspalt
- 16, 116, 216: rohrförmiger Strang
- 18, 118: Schaft
- 20, 120, 220: Extruderkopf
- 22, 122, 222: Kalibriervorrichtung
- 24, 124, 224: Kalibrierhülse
- 25, 125, 225: Kühlrohr
- 26, 226: Spiegel
- 28, 128, 228: Motor
- 30: Hohlleiter
- 32, 132, 232: Transceiver
- 34, 234: Strahlung
- 36: Innenfläche des Stranges
- 38: Außenseite des Strangs
- 40: Innenfläche der Kalibrierhülse
- 42, 142, 242: Leitung
- 44, 144, 244: Auswerteeinrichtung
- 146, 246: Pfeile
- 148: Rotationsmittelpunkt
- 150: Kreisbahn
- 152: Gehäuse
- 248: Versorgungsleitung
- 250: Gehäuse

## Patentansprüche

1. Verfahren zum Vermessen eines aus einer Extrusionsvorrichtung (10, 110, 210) austretenden rohrförmigen Strangs (16, 116, 216), **dadurch gekennzeichnet, dass** von mindestens einer Strahlungsquelle elektromagnetische Strahlung im Frequenzbereich von 1 GHz bis 6000 GHz von innen auf die Innenseite (36) des rohrförmigen Strangs (16, 116, 216) geleitet wird, dass durch den rohrförmigen Strang (16, 116, 216) reflektierte elektromagnetische Strahlung von mindestens einem Strahlungsempfänger empfangen wird, und dass aus der empfangenen elektromagnetischen Strahlung der Durchmesser und/oder die Wandstärke und/oder Formabweichungen des rohrförmigen Strangs (16, 116, 216) ermittelt wird, wobei die elektromagnetische Strahlung auf mehrere über den Innenumfang des rohrförmigen Strangs (16, 116, 216) verteilte Messbereiche der Innenseite (36) des rohrförmigen Strangs (16, 116, 216) geleitet wird, und wobei die elektromagnetische Strahlung mit mindestens einem im Inneren des rohrförmigen Strangs (16, 116, 216) angeordneten, um die Längsachse des rohrförmigen Strangs (16, 116, 216) rotierenden Strahlungssender auf die Innenseite (36) des rohrförmigen Strangs (16, 116, 216) geleitet wird.

2. Verfahren nach Anspruch 1, **dadurch gekennzeichnet, dass** die Extrusionsvorrichtung (10, 110, 210) auf Grundlage der ermittelten Werte für Durchmesser und/oder Wandstärke und/oder Formabweichungen gesteuert und/oder geregelt wird.

3. Verfahren nach einem der Ansprüche 1 oder 2, **dadurch gekennzeichnet, dass** die mindestens eine Strahlungsquelle und/oder der mindestens eine Strahlungsempfänger im Inneren des rohrförmigen Strangs (16, 116, 216) angeordnet ist, wobei vorzugsweise eine Versorgung der mindestens einen Strahlungsquelle und/oder des mindestens einen Strahlungsempfängers mit elektrischer Energie, Daten und/oder mit einem Kühlmittel durch mindestens eine aus einem Extruderkopf (20, 120, 220) der Extrusionsvorrichtung (10, 110, 210) zu der mindestens einen Strahlungsquelle und/oder dem mindestens einen Strahlungsempfänger geführten Versorgungsleitung (248) erfolgt.

4. Verfahren nach einem der Ansprüche 1 oder 2, **dadurch gekennzeichnet, dass** die mindestens eine Strahlungsquelle und/oder der mindestens eine Strahlungsempfänger außerhalb des rohrförmigen Strangs (16, 116, 216) angeordnet ist, und dass von der mindestens einen Strahlungsquelle ausgesandte Strahlung über mindestens einen Strahlungsleiter in das Innere des rohrförmigen Strangs (16, 116, 216) geleitet wird, und dass die von dem rohrförmigen Strang (16, 116, 216) reflektierte Strahlung über mindestens einen Strahlungsleiter aus dem Inneren des rohrförmigen Strangs (16, 116, 216) zu dem mindestens einen Strahlungsempfänger geleitet wird, wobei vorzugsweise der mindestens eine Strahlungsleiter aus einem Extruderkopf (20, 120, 220) der Extrusionsvorrichtung (10, 110, 210) in das Innere des rohrförmigen Strangs (16, 116, 216) geführt ist.

5. Verfahren nach einem der vorhergehenden Ansprüche, **dadurch gekennzeichnet, dass** die elektromagnetische Strahlung ausgehend von der Längsachse des rohrförmigen Strangs (16, 116, 216) und/oder senkrecht zur Längsachse des rohrförmigen Strangs (16, 116, 216) auf die Innenseite (36) des rohrförmigen Strangs (16, 116, 216) geleitet wird.

6. Verfahren nach einem der vorhergehenden Ansprüche, **dadurch gekennzeichnet, dass** der mindestens eine Strahlungssender die mindestens eine Strahlungsquelle ist oder dass der mindestens eine Strahlungssender mindestens ein durch die mindestens eine Strahlungsquelle bestrahlter, um die Längsachse des rohrförmigen Strangs (16, 116, 216) rotierender Spiegel (26, 226) ist.

7. Verfahren nach einem der vorhergehenden Ansprüche, **dadurch gekennzeichnet, dass** die Temperatur des rohrförmigen Strangs (16, 116, 216) an mindestens einem Messbereich am Innenumfang des rohrförmigen Strangs (16, 116, 216) gemessen wird.

8. Verfahren nach einem der vorhergehenden Ansprüche, **dadurch gekennzeichnet, dass** sich der vermessene Teil des rohrförmigen Strangs (16, 116, 216) während der Messung in einer der Extrusionsvorrichtung (10, 110, 210) nachfolgenden Kalibriervorrichtung (22, 122, 222) befindet.

9. Verfahren nach einem der vorhergehenden Ansprüche, **dadurch gekennzeichnet, dass** außerhalb des rohrförmigen Strangs (16, 116, 216) mindestens ein Strahlungsreflektor vorgesehen ist, der von der mindestens einen Strahlungsquelle auf die Innenseite (36) des rohrförmigen Strangs (16, 116, 216) geleitete elektromagnetische Strahlung reflektiert, und dass aus dieser reflektierten Strahlung der Brechungsindex des Strangmaterials bestimmt wird, wobei vorzugsweise der mindestens eine Strahlungsreflektor durch eine metallische Kalibrierhülse (24, 124, 224) der Kalibriervorrichtung (22, 122, 222) gebildet ist.

10. Vorrichtung zum Vermessen eines aus einer Extrusionsvorrichtung (10, 110, 210) austretenden rohrförmigen Strangs (16, 116, 216), **dadurch gekennzeichnet, dass** mindestens eine Strahlungsquelle für elektromagnetische Strahlung im Frequenzbereich von 1 GHz bis 6000 GHz vorgesehen ist, die derart angeordnet ist, dass von ihr ausgesandte elektromagnetische Strahlung von innen auf die Innenseite (36) des rohrförmigen Strangs (16, 116, 216) geleitet wird, dass weiterhin mindestens ein Strahlungsempfänger vorgesehen ist zum Empfangen von durch den rohrförmigen Strang (16, 116, 216) reflektierter elektromagnetischer Strahlung, und dass eine Auswerteeinrichtung (44, 144, 244) vorgesehen ist, die dazu ausgebildet ist, aus der empfangenen elektromagnetischen Strahlung den Durchmesser und/oder die Wandstärke und/oder Formabweichungen des rohrförmigen Strangs zu ermitteln, wobei die mindestens eine Strahlungsquelle derart angeordnet ist, dass die elektromagnetische Strahlung auf mehrere über den Innenumfang des rohrförmigen Strangs (16, 116, 216) verteilte Messbereiche der Innenseite (36) des rohrförmigen Strangs (16, 116, 216) geleitet wird, und wobei mindestens ein im Inneren des rohrförmigen Strangs (16, 116, 216) angeordneter, um die Längsachse des rohrförmigen Strangs (16, 116, 216) rotierender Strahlungssender zum Leiten der elektromagnetischen Strahlung auf die Innenseite (36) des rohrförmigen Strangs (16, 116, 216) vorgesehen ist.

11. Vorrichtung nach Anspruch 10, **dadurch gekennzeichnet, dass** weiterhin eine Steuer- und/oder Regelvorrichtung (44, 144, 244) vorgesehen ist, die auf Grundlage der ermittelten Werte für Durchmesser und/oder Wandstärke und/oder Formabweichungen die Extrusionsvorrichtung (10, 110, 210) steuert und/oder regelt.

12. Vorrichtung nach einem der Ansprüche 10 oder 11, **dadurch gekennzeichnet, dass** die mindestens eine Strahlungsquelle und/oder der mindestens eine Strahlungsempfänger im Inneren des rohrförmigen Strangs (16, 116, 216) angeordnet ist, wobei vorzugsweise mindestens eine aus einem Extruderkopf (20, 120, 220) der Extrusionsvorrichtung (10, 110, 210) zu der mindestens einen Strahlungsquelle und/oder dem mindestens einen Strahlungsempfänger führende Versorgungsleitung (248) vorgesehen ist zur Versorgung der mindestens einen Strahlungsquelle und/oder des mindestens einen Strahlungsempfängers mit elektrischer Energie, Daten und/oder mit einem Kühlmittel.

13. Vorrichtung nach einem der Ansprüche 10 oder 11, **dadurch gekennzeichnet, dass** die mindestens eine Strahlungsquelle und/oder der mindestens eine Strahlungsempfänger außerhalb des rohrförmigen Strangs (16, 116, 216) angeordnet ist, und dass mindestens ein Strahlungsleiter vorgesehen ist, der von der mindestens einen Strahlungsquelle ausgesandte Strahlung in das Innere des rohrförmigen Strangs (16, 116, 216) leitet und die von dem rohrförmigen Strang (16, 116, 216) reflektierte Strahlung aus dem Inneren des rohrförmigen Strangs (16, 116, 216) zu dem mindestens einen Strahlungsempfänger leitet, wobei vorzugsweise der mindestens eine Strahlungsleiter aus einem Extruderkopf (20, 120, 220) der Extrusionsvorrichtung (10, 110, 210) in das Innere des rohrförmigen Strangs (16, 116, 216) geführt ist.

14. Vorrichtung nach einem der Ansprüche 12 bis 15, **dadurch gekennzeichnet, dass** die mindestens eine Strahlungsquelle derart angeordnet ist, dass die elektromagnetische Strahlung ausgehend von der Längsachse des rohrförmigen Strangs und/oder senkrecht zur Längsachse des rohrförmigen Strangs auf die Innenseite (36) des rohrförmigen Strangs (16, 116, 216) geleitet wird.

15. Vorrichtung nach einem der Ansprüche 10 bis 14, **dadurch gekennzeichnet, dass** der mindestens eine Strahlungssender die mindestens eine Strahlungsquelle ist oder dass der mindestens eine Strahlungssender ein durch die mindestens eine Strahlungsquelle bestrahlter, um die Längsachse des rohrförmigen Strangs (16, 116, 216) rotierender Spiegel (26, 226) ist.

16. Vorrichtung nach einem der Ansprüche 10 bis 15, **dadurch gekennzeichnet, dass** ein Temperatursensor vorgesehen ist zum Messen der Temperatur des rohrförmigen Strangs (16, 116, 216) an mindestens einem Messbereich am Innenumfang des rohrförmigen Strangs (16, 116, 216).

17. Vorrichtung nach einem der Ansprüche 10 bis 16, **dadurch gekennzeichnet, dass** die Vorrichtung derart angeordnet ist, dass sich der vermessene Teil des rohrförmigen Strangs (16, 116, 216) während der Messung in einer der Extrusionsvorrichtung (10, 110, 210) nachfolgenden Kalibriervorrichtung (22, 122, 222) befindet.

18. Vorrichtung nach einem der Ansprüche 10 bis 17, **dadurch gekennzeichnet, dass** außerhalb des rohrförmigen Strangs (16, 116, 216) mindestens ein Strahlungsreflektor vorgesehen ist, der von der Strahlungsquelle auf die Innenseite (36) des rohrförmigen Strangs (16, 116, 216) geleitete elektromagnetische Strahlung reflektiert, und dass die Auswerteeinrichtung (44, 144, 244) dazu ausgebildet ist, aus dieser reflektierten Strahlung den Brechungsindex des Strangmaterials zu bestimmen.

19. Vorrichtung nach den Ansprüchen 17 und 18, **dadurch gekennzeichnet, dass** der mindestens eine Strahlungsreflektor durch eine metallische Kalibrierhülse (24, 124, 224) der Kalibriervorrichtung (22, 122, 222) gebildet ist.

## Claims

1. A method for measuring a tubular strand (16, 116, 216) exiting from an extrusion device (10, 110, 210), **characterized in that** electromagnetic radiation from at least one radiation source within a frequency range of 1 GHz to 6000 GHz is directed from the inside to the inner side (36) of the tubular strand (16, 116, 216), electromagnetic radiation reflected by the tubular strand (16, 116, 216) is received by at least one radiation receiver, and the diameter, and/or the wall thickness, and/or deviations in shape of the tubular strand (16, 116, 216) is/are established from the received electromagnetic radiation, wherein the electromagnetic radiation is directed to several measuring regions of the inner side (36) of the tubular strand (16, 116, 216) distributed over the inner circumference of the tubular strand (16, 116, 216), and wherein the electromagnetic radiation is directed to the inner side (36) of the tubular strand (16, 116, 216) with at least one radiation transmitter arranged in the interior of the tubular strand (16, 116, 216) and rotating about the longitudinal axis of the tubular strand (16, 116, 216).

2. The method according to Claim 1, **characterized in that** the extrusion device (10, 110, 210) is controlled and/or regulated on the basis of the established values for the diameter, and/or wall thickness, and/or deviations in shape.

3. The method according to any one of Claims 1 or 2, **characterized in that** the at least one radiation source and/or the at least one radiation receiver is/are arranged in the interior of the tubular strand (16, 116, 216), wherein the at least one radiation source and/or the at least one radiation receiver is/are preferably supplied with electrical energy, data and/or with a coolant through at least one supply line (248) conducted out of an extruder head (20, 120, 220) of the extrusion device (10, 110, 210) to the at least one radiation source and/or the at least one radiation receiver.

4. The method according to any one of Claims 1 or 2, **characterized in that** the at least one radiation source and/or the at least one radiation receiver is/are arranged outside of the tubular strand (16, 116, 216), and radiation emitted by the at least one radiation source is directed via at least one radiation conductor into the interior of the tubular strand (16, 116, 216), and the radiation reflected by the tubular strand (16, 116, 216) is directed via at least one radiation conductor out of the interior of the tubular strand (16, 116, 216) to the at least one radiation receiver, wherein the at least one radiation conductor is preferably conducted out of an extruder head (20, 120, 220) of the extrusion device (10, 110, 210) into the interior of the tubular strand (16, 116, 216).

5. The method according to any one of the preceding claims, **characterized in that** the electromagnetic radiation is directed to the inner side (36) of the tubular strand (16, 116, 216) starting from the longitudinal axis of the tubular strand (16, 116, 216), and/or perpendicular to the longitudinal axis of the tubular strand (16, 116, 216).

6. The method according to any one of the preceding claims, **characterized in that** the at least one radiation transmitter is the at least one radiation source or the at least one radiation transmitter is at least one mirror (26, 226) irradiated by the at least one radiation source and rotating about the longitudinal axis of the tubular strand (16, 116, 216).

7. The method according to any one of the preceding claims, **characterized in that** the temperature of the tubular strand (16, 116, 216) is measured at at least one measuring region on the inner circumference of the tubular strand (16, 116, 216).

8. The method according to any one of the preceding claims, **characterized in that** the measured part of the tubular strand (16, 116, 216) is located in a calibration device (22, 122, 222) following the extrusion device (10, 110, 210) during measurement.

9. The method according to any one of the preceding claims, **characterized in that** at least one radiation reflector is provided outside of the tubular strand (16, 116, 216), which reflects electromagnetic radiation directed from the at least one radiation source to the inner side (36) of the tubular strand (16, 116, 216), and the refractive index of the strand material is determined from said reflected radiation, wherein the at least one radiation reflector is preferably formed by a metal calibration sleeve (24, 124, 224) of the calibration device (22, 122, 222).

10. A device for measuring a tubular strand (16, 116, 216) exiting from an extrusion device (10, 110, 210), **characterized in that** at least one radiation source is provided for electromagnetic radiation within a frequency range of 1 GHz to 6000 GHz, which is arranged such that electromagnetic radiation emitted by it is directed from the inside to the inner side (36) of the tubular strand (16, 116, 216), furthermore at least one radiation receiver is provided in order to receive electromagnetic radiation reflected by the tubular strand (16, 116, 216), and an evaluation apparatus (44, 144, 244) is provided, which is configured to establish the diameter, and/or the wall thickness, and/or deviations in shape of the tubular strand from the received electromagnetic radiation, wherein the at least one radiation source is arranged such that the electromagnetic radiation is directed to several measuring regions of the inner side (36) of the tubular strand (16, 116, 216) distributed over the inner circumference of the tubular strand (16, 116, 216), and wherein at least one radiation transmitter arranged in the interior of the tubular strand (16, 116, 216) and rotating about the longitudinal axis of the tubular strand (16, 116, 216) is provided in order to direct the electromagnetic radiation to the inner side (36) of the tubular strand (16, 116, 216).

11. The device according to Claim 10, **characterized in that** a control and/or regulation device (44, 144, 244) is furthermore provided, which controls and/or regulates the extrusion device (10, 110, 210) on the basis of the established values for the diameter, and/or wall thickness, and/or deviations in shape.

12. The device according to any one of Claims 10 or 11, **characterized in that** the at least one radiation source and/or the at least one radiation receiver is arranged in the interior of the tubular strand (16, 116, 216), wherein at least one supply line (248) which is conducted out of an extruder head (20, 120, 220) of the extrusion device (10, 110, 210) to the at least one radiation source, and/or the at least one radiation receiver is preferably provided in order to supply the at least one radiation source and/or the at least one radiation receiver with electrical energy, data and/or with a coolant.

13. The device according to any one of Claims 10 or 11, **characterized in that** the at least one radiation source and/or the at least one radiation receiver is/are arranged outside of the tubular strand (16, 116, 216), and at least one radiation conductor is provided, which directs radiation emitted by the at least one radiation source into the interior of the tubular strand (16, 116, 216), and directs the radiation reflected by the tubular strand (16, 116, 216) out of the interior of the tubular strand (16, 116, 216) to the at least one radiation receiver, wherein the at least one radiation conductor is preferably conducted out of an extruder head (20, 120, 220) of the extrusion device (10, 110, 210) into the interior of the tubular strand (16, 116, 216).

14. The device according to any one of Claims 12 to 15, **characterized in that** the at least one radiation source is arranged such that the electromagnetic radiation is directed to the inner side (36) of the tubular strand (16, 116, 216) starting from the longitudinal axis of the tubular strand, and/or perpendicular to the longitudinal axis of the tubular strand.

15. The device according to any one of Claims 10 to 14, **characterized in that** the at least one radiation transmitter is the at least one radiation source or the at least one radiation transmitter is a mirror (26, 226) irradiated by the at least one radiation source and rotating about the longitudinal axis of the tubular strand (16, 116, 216).

16. The device according to any one of Claims 10 to 15, **characterized in that** a temperature sensor is provided in order to measure the temperature of the tubular strand (16, 116, 216) at at least one measuring region on the inner circumference of the tubular strand (16, 116, 216).

17. The device according to any one of Claims 10 to 16, **characterized in that** the device is arranged such that the measured part of the tubular strand (16, 116, 216) is located in a calibration device (22, 122, 222) following the extrusion device (10, 110, 210) during measurement.

18. The device according to any one of Claims 10 to 17, **characterized in that** at least one radiation reflector is provided outside of the tubular strand (16, 116, 216), which reflects electromagnetic radiation directed from the radiation source to the inner side (36) of the tubular strand (16, 116, 216), and the evaluation apparatus (44, 144, 244) is configured to determine the refractive index of the strand material from said reflected radiation.

19. The device according to Claims 17 and 18, **characterized in that** the at least one radiation reflector is formed by a metal calibration sleeve (24, 124, 224) of the calibration device (22, 122, 222).

## Revendications

1. Procédé permettant de mesurer une barre tubulaire (16, 116, 216) sortant d'un dispositif d'extrusion (10, 110, 210), **caractérisé en ce qu'**un rayonnement électromagnétique dans la plage de fréquence de 1 GHz à 6000 GHz est guidé à partir d'au moins une source de rayonnement depuis l'intérieur vers le côté intérieur (36) de la barre tubulaire (16, 116, 216), **en ce que** le rayonnement électromagnétique réfléchi par la barre tubulaire (16, 116, 216) est reçu par au moins un récepteur de rayonnement, et **en ce que** le diamètre et/ou l'épaisseur de paroi et/ou des écarts de forme de la barre tubulaire (16, 116, 216) est/sont déterminé(es) à partir du rayonnement électromagnétique reçu, dans lequel le rayonnement électromagnétique est guidé vers plusieurs régions de mesure du côté intérieur (36) de la barre tubulaire (16, 116, 216) réparties sur la circonférence intérieure de la barre tubulaire (16, 116, 216), et dans lequel le rayonnement électromagnétique est guidé vers le côté intérieur (36) de la barre tubulaire (16, 116, 216) à l'aide d'au moins un émetteur de rayonnement disposé à l'intérieur de la barre tubulaire (16, 116, 216) et tournant autour de l'axe longitudinal de la barre tubulaire (16, 116, 216).

2. Procédé selon la revendication 1, **caractérisé en ce que** le dispositif d'extrusion (10, 110, 210) est commandé et/ou réglé sur la base des valeurs déterminées pour le diamètre et/ou l'épaisseur de paroi et/ou des écarts de forme.

3. Procédé selon l'une des revendications 1 ou 2, **caractérisé en ce que** l'au moins une source de rayonnement et/ou l'au moins un récepteur de rayonnement est/sont disposé(es) à l'intérieur de la barre tubulaire (16, 116, 216), dans lequel une alimentation de l'au moins une source de rayonnement et/ou de l'au moins un récepteur de rayonnement avec de l'énergie électrique, des données et/ou un liquide de refroidissement est effectuée de préférence par le biais d'au moins une ligne d'alimentation (248) s'étendant à partir d'une tête d'extrudeuse (20, 120, 220) du dispositif d'extrusion (10, 110, 210) vers l'au moins une source de rayonnement et/ou l'au moins un récepteur de rayonnement.

4. Procédé selon l'une des revendications 1 ou 2, **caractérisé en ce que** l'au moins une source de rayonnement et/ou l'au moins un récepteur de rayonnement est/sont disposé(es) à l'extérieur de la barre tubulaire (16, 116, 216), et **en ce qu'**un rayonnement émis par l'au moins une source de rayonnement est guidé vers l'intérieur de la barre tubulaire (16, 116, 216) par le biais d'au moins un guide de rayonnement, et **en ce que** le rayonnement réfléchi par la barre tubulaire (16, 116, 216) est guidé à partir de l'intérieur de la barre tubulaire (16, 116, 216) vers l'au moins un récepteur de rayonnement par le biais d'au moins un guide de rayonnement, dans lequel l'au moins un guide de rayonnement s'étend de préférence à partir d'une tête d'extrudeuse (20, 120, 220) du dispositif d'extrusion (10, 110, 210) vers l'intérieur de la barre tubulaire (16, 116, 216).

5. Procédé selon l'une des revendications précédentes, **caractérisé en ce que** le rayonnement électromagnétique est guidé vers le côté intérieur (36) de la barre tubulaire (16, 116, 216) depuis l'axe longitudinal de la barre tubulaire (16, 116, 216) et/ou perpendiculairement à l'axe longitudinal de la barre tubulaire (16, 116, 216).

6. Procédé selon l'une des revendications précédentes, **caractérisé en ce que** l'au moins un émetteur de rayonnement est l'au moins une source de rayonnement ou **en ce que** l'au moins un émetteur de rayonnement est au moins un miroir (26, 226) irradié par l'au moins une source de rayonnement, tournant autour de l'axe longitudinal de la barre tubulaire (16, 116, 216).

7. Procédé selon l'une des revendications précédentes, **caractérisé en ce que** la température de la barre tubulaire (16, 116, 216) est mesurée au niveau d'au moins une région de mesure sur la circonférence intérieure de la barre tubulaire (16, 116, 216).

8. Procédé selon l'une des revendications précédentes, **caractérisé en ce que** pendant la mesure, la partie mesurée de la barre tubulaire (16, 116, 216) se trouve dans un dispositif d'étalonnage (22, 122, 222) disposé en aval du dispositif d'extrusion (10, 110, 210).

9. Procédé selon l'une des revendications précédentes, **caractérisé en ce qu'**il est prévu au moins un réflecteur de rayonnement à l'extérieur de la barre tubulaire (16, 116, 216), lequel réfléchit le rayonnement électromagnétique guidé à partir de l'au moins une source de rayonnement vers le côté intérieur (36) de la barre tubulaire (16, 116, 216), et **en ce que** l'indice de réfraction du matériau de barre est déterminé à partir de ce rayonnement réfléchi, dans lequel l'au moins un récepteur de rayonnement est formé de préférence par une douille d'étalonnage métallique (24, 124, 224) du dispositif d'étalonnage (22, 122, 222).

10. Dispositif permettant de mesurer une barre tubulaire (16, 116, 216) sortant d'un dispositif d'extrusion (10, 110, 210), **caractérisé en ce qu'**il est prévu au moins une source de rayonnement pour un rayonnement électromagnétique dans la plage de fréquence de 1 GHz à 6000 GHz, laquelle est disposée de telle façon, que le rayonnement électromagnétique émis par celle-ci est guidé depuis l'intérieur vers le côté intérieur (36) de la barre tubulaire (16, 116, 216), **en ce qu'**il est en outre prévu au moins un récepteur de rayonnement pour la réception d'un rayonnement électromagnétique réfléchi par la barre tubulaire (16, 116, 216), et **en ce qu'**il est prévu un dispositif d'évaluation (44, 144, 244) conçu pour déterminer le diamètre et/ou l'épaisseur de paroi et/ou des écarts de forme de la barre tubulaire à partir du rayonnement électromagnétique reçu, dans lequel l'au moins une source de rayonnement est disposée de telle façon que le rayonnement électromagnétique est guidé vers plusieurs régions de mesure du côté intérieur (36) de la barre tubulaire (16, 116, 216) réparties sur la circonférence intérieure de la barre tubulaire (16, 116, 216), et dans lequel il est prévu au moins un émetteur de rayonnement disposé à l'intérieur de la barre tubulaire (16, 116, 216) et tournant autour de l'axe longitudinal de la barre tubulaire (16, 116, 216) pour le guidage du rayonnement électromagnétique vers le côté intérieur (36) de la barre tubulaire (16, 116, 216).

11. Dispositif selon la revendication 10, **caractérisé en ce qu'**il est en outre prévu un dispositif de commande et/ou de réglage (44, 144, 244), lequel commande et/ou règle le dispositif d'extrusion (10, 110, 210) sur la base des valeurs déterminées pour le diamètre et/ou l'épaisseur de paroi et/ou des écarts de forme.

12. Dispositif selon l'une des revendications 10 ou 11, **caractérisé en ce que** l'au moins une source de rayonnement et/ou l'au moins un récepteur de rayonnement est/sont disposé(es) à l'intérieur de la barre tubulaire (16, 116, 216), dans lequel il est prévu de préférence au moins une ligne d'alimentation (248) s'étendant à partir d'une tête d'extrudeuse (20, 120, 220) du dispositif d'extrusion (10, 110, 210) vers l'au moins une source de rayonnement et/ou l'au moins un récepteur de rayonnement, pour l'alimentation de l'au moins une source de rayonnement et/ou de l'au moins un récepteur de rayonnement en énergie électrique, en données et/ou en liquide de refroidissement.

13. Dispositif selon l'une des revendications 10 ou 11, **caractérisé en ce que** l'au moins une source de rayonnement et/ou l'au moins un récepteur de rayonnement est/sont disposé(es) à l'extérieur de la barre tubulaire (16, 116, 216), et **en ce qu'**il est prévu au moins un guide de rayonnement guidant un rayonnement émis par l'au moins une source de rayonnement vers l'intérieur de la barre tubulaire (16, 116, 216) et guidant le rayonnement réfléchi par la barre tubulaire (16, 116, 216) à partir de l'intérieur de la barre tubulaire (16, 116, 216) vers l'au moins un récepteur de rayonnement, dans lequel l'au moins un guide de rayonnement s'étend de préférence à partir d'une tête d'extrudeuse (20, 120, 220) du dispositif d'extrusion (10, 110, 210) vers l'intérieur de la barre tubulaire (16, 116, 216).

14. Dispositif selon l'une des revendications 12 à 15, **caractérisé en ce que** l'au moins une source de rayonnement est disposée de telle façon que le rayonnement électromagnétique est guidé à partir de l'axe longitudinal de la barre tubulaire et/ou perpendiculairement à l'axe longitudinal de la barre tubulaire vers le côté intérieur (36) de la barre tubulaire (16, 116, 216).

15. Dispositif selon l'une des revendications 10 à 14, **caractérisé en ce que** l'au moins un émetteur de rayonnement est l'au moins une source de rayonnement ou **en ce que** l'au moins un émetteur de rayonnement est un miroir (26, 226) irradié par l'au moins une source de rayonnement, tournant autour de l'axe longitudinal de la barre tubulaire (16, 116, 216).

16. Dispositif selon l'une des revendications 10 à 15, **caractérisé en ce qu'**il est prévu un capteur de température permettant de mesurer la température de la barre tubulaire (16, 116, 216) au niveau d'au moins une région de mesure sur la circonférence intérieure de la barre tubulaire (16, 116, 216).

17. Dispositif selon l'une des revendications 10 à 16, **caractérisé en ce que** le dispositif est disposé de telle façon que pendant la mesure, la partie mesurée de la barre tubulaire (16, 116, 216) se trouve dans un dispositif d'étalonnage (22, 122, 222) disposé en aval du dispositif d'extrusion (10, 110, 210).

18. Dispositif selon l'une des revendications 10 à 17, **caractérisé en ce qu'**il est prévu au moins un réflecteur de rayonnement à l'extérieur de la barre tubulaire (16, 116, 216), lequel réfléchit le rayonnement électromagnétique guidé à partir de la source de rayonnement vers le côté intérieur (36) de la barre tubulaire (16, 116, 216), et **en ce que** le dispositif d'évaluation (44, 144, 244) est conçu pour déterminer l'indice de réfraction du matériau de barre à partir de ce rayonnement réfléchi.

19. Dispositif selon les revendications 17 et 18, **caractérisé en ce que** l'au moins un récepteur de rayonnement est formé par une douille d'étalonnage métallique (24, 124, 224) du dispositif d'étalonnage (22, 122, 222).
